# EUROPEAN PATENT APPLICATION

(11) **EP 1 717 278 A1**
(43) Date of publication of application: **02.11.2006**
(21) Application number: 05009103.2
(22) Date of filing: 26.04.2005
(51) Int. Cl.: C09C 1/30, C09C 3/12, C09C 1/36, C09D 1/00, C09C 1/42

(54) **Coated particles and coating compositions comprising coated particles**

(71) Applicant: Nuplex Resins B.V., 4600 AB Bergen op Zoom (NL)
(72) Inventor: Schutyser, Jan Andre Jozef, 6952 JJ Dieren (NL); Vijverberg, Cornelis Adrianus Maria, 4661WK Halsteren (NL)
(74) Representative: Derks, Wilbert

(57) **Abstract**

The invention relates to coated particles comprising particles and a polysiloxane coating and to a process for the manufacture of said coated particles. Further, the invention relates to the use of the coated particles to improve surface properties of articles and to material compositions comprising the coated particles, in particular coating compositions. According to the invention there is provided coated particles comprising particles having a surface with hydroxy functional groups and a polysiloxane coating comprising comprising a reaction product of polysiloxane disilanol according to formula I: 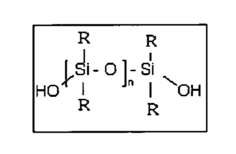 wherein n is 1 to 25, and wherein each R is a same or different hydrocarbon group, and a coating crosslinking agent, preferably an alkoxysiloxane having 3 or 4 alkoxy groups which polysiloxane coating is at least partly grafted to the particle surface by reaction with the hydroxy functional groups on the particles. The coated particles can be used to impart improved surface properties in particular in coatings.

## Description

The invention relates to coated particles comprising particles and a polysiloxane coating and to a process for the manufacture of said coated particles. Further, the invention relates to the use of the coated particles to improve surface properties of articles and to material compositions comprising the coated particles, in particular coating compositions.

WO 01/09260 describes a coating composition comprising a film forming binder system (i.e. crosslinkable resin and crosslinking agent) and a polysiloxane modified particle system comprising one or more polysiloxanes with a least one reactive functional group, a plurality of particles and at least one curing agent comprising one or more functional groups that is reactive with any reactive functional group of the polysiloxane. Such a composition is used in a pigment-free top or clear coating composition for the finishing of articles, for example motorcycles, cars, trains, buses, trucks, and aeroplanes to provide a high scratch resistance. A feature of the cured coating is that the cured coating has particles enriched at the surface region. The applied polysiloxanes are intended to react chemically with their organic functional groups (e.g. alkylene hydroxy groups) with crosslinking agent(s) of the coating composition such as aminoresins and polyisocyanates. The nanoparticles are deliberately not provided with functional groups enabling coupling to the polysiloxanes. A drawback of this invention is the high cost of the polysiloxane types with a least one reactive functional group and the bad recoatability requiring acid adhesion promoters as stated in WO03-011992. Further disadvantages are the large amount of the polysiloxane required to significantly improve the scratch resistance and, especially at high amounts of polysiloxane modified particles, the implied high risk of haze formation, which is particularly undesirable in clear coatings.

The object of the invention therefore is provided coated particles in particular for coating compositions that provide a good scratch resistance without a risk of haze formation in a clear coating at a relatively low price.

According to the invention there is provided coated particles comprising particles having a surface with hydroxy functional groups and a polysiloxane coating comprising comprising a reaction product of polysiloxane disilanol according to formula I: 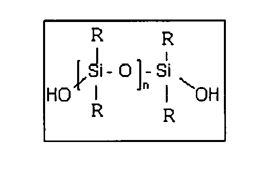 wherein n is 1 to 25, and wherein each R is a same or different hydrocarbon group, and a coating crosslinking agent which polysiloxane coating is at least partly grafted to the particle surface by reaction with the hydroxy functional groups on the particles.

It was found that the coated particles according to the invention have excellent properties for use in coating composition to make pigment-free top coatings or clear coatings in the finishing of articles, for example motorcycles, cars, trains, buses, trucks, and aeroplanes. It was found that not only metal surfaces, but also plastic article surfaces, in particular also transparent plastic articles can be coated with the coating compositions according to the invention. The polysiloxane disilanol is relatively inexpensive and is the amount of polysiloxane coating on the particle require to achieve a good scratch resistance is relatively low, due to which the coated particles are relatively inexpensive. A further advantage of the coated particles according to the invention is that it is easier to refinish a coated article with a coating composition comprising the coated particles according to the invention. Easier means that separate measures or pretreatments required in the prior art to achieve a good refinishing treatment not required with coating compositions according to the invention. Another advantage is that the coated particles have improved hydrolytic stability causing improved durability of the coating composition containing the coating particles.

EP 0832947 describes automotive clear coating containing a film forming binder system (i.e. crosslinkable resin and crosslinking agent) having improved dry scratch resistance by the introduction of surface reactive inorganic microparticles (less than 1 micron in size). The surface of the microparticles such as colloidal silicas are made reactive by using one of a wide range of alkoxy silane coupling agents (e.g. carbamate or glycidoxy silanes) having a dual functionality permitting to link covalently the inorganic (particle) phase with the polymeric phase. However, to obtain an acceptable improvement of the dry scratch resistance, high loadings of nanoparticles are required, which has the disadvantage of high costs and causing brittleness. Further, it was found that the car wash scratch resistance is not significantly improved by these particles.

It was found that, as opposed to EP 0832947, the coated particles according to the invention migrate to the surface of a coating during curing of the coating composition. Because of this effect, only a relatively small amount of the coated particles are necessary in a coating composition to achieve an acceptable scratch resistance improvement or reversely a higher scratch resistance improvement can be obtained with the same amount. Compared to prior art WO 01/09260, the surface migration and hence the scratch resistance improvement efficiency are improved without however risking haze in the final coating.

In principle, the coating crosslinking agent can be any compound suitable for crosslinking is polyhydroxy functional compounds, for example borates, titanates, phosphates and silanes. With the coating crosslinking agent the polysiloxane coating forms a densely crosslinked compact coating layer which is firmly bonded to the hydroxy functional groups on the particle surface. Very good results were obtained when in the coated particles according to the invention, the coating crosslinking agent is an alkoxysilane having the structure [R'O]ₘ―Si―[R"]₄₋ₘ wherein m = 2, 3 or 4 and R' and R" are hydrocarbon groups. The alkoxysilane has a very good reactivity towards the polysiloxane disilanol and towards the hydroxyl groups on the surface of the particles, in particular when the particles are partially organic modified silica particles. A further advantage is that the coating crosslinking agent does not disturb the apolar nature of the coating and a very good and efficient scratch resistance improvement is obtained. Further the coating formed is hydrolytically stable. In view of obtaining a higher crosslinking density, the alkoxy silane preferably comprises 3 or 4 alkoxy groups, in particular the alkoxysilane preferably has an average number of alkoxy groups between 2.5 and 4. In the alkoxysilane the hydrocarbon groups are preferably alkyl groups having one to four carbons. Particularly preferred coating crosslinking agents are tetraethoxysilane (TEOS) or triethoxymethyl-(or ethyl)silane.

In the coated particles according to the invention the molar ratio of the coating crosslinker relative to the polysiloxane disilanol is between 2 and 0.1, preferably between 1.5 and 0.8 and most preferably between 1.2 and 0.8.

Although not practical, in theory it is possible to carry out a precondensation reaction ex situ between a polysiloxane disilanol and a coating crosslinking agent, in particular an alkoxysilane, to form a polysiloxane polysilanol having more than 2 silanol groups and then contact the polysilanol optionally with further coating crosslinking agent to react with the particles. The coated article according to the invention is intended to also encompasses this special embodiment. It is considered that this special embodiment is the same as the one described above because is this condensation reaction also occurs in situ in the presence of the particles.

Preferably, in the coated particles according to the invention, the polysiloxane disilanol has an average number of siloxane groups n between 1 and 10, preferably between 2 and 5. It was found that with such a low number of siloxane groups in the polysiloxane the crosslinking efficiency and density in the coating is higher and the scratch resistance improvement efficiency is higher.

Because not all hydroxy functional groups on the particle surface will have been reacted with either the polysiloxane disilanol or the coating crosslinking agent, it is preferred that the hydroxy functional groups on the particles surface are esterified with an alcohol. The advantages that the coated particles are more hydrofobic and have higher scratch resistance improvement efficiency.

Preferably, in the coated particles according to the invention, the hydrocarbon on the polysiloxane disilanol is a hydrofobic group, for example an alkyl, aryl or aralkyl group, preferably an alkyl having 1 to 4 carbon atoms. Most preferably, the polysiloxane disilanol is polydimethyl siloxane disilanol.

In the coated particles the particles preferably are nanoparticles having an average diameter between 1 and 400 nanometres. Nanoparticles are invisible in visible light and therefore can be used in a clear coating. Further, the nano particles more easily migrate to the surface of the coating. In view of that, it is more preferred that is particles have an average diameter between one and 150 nanometres, to prevent that small clusters of particles become visible and cause haziness in the clear coating. Most preferably the nanoparticles have an average diameter between 1 and 50 nanometres.

One of the advantages of the present invention is that the coated particles comprise a relatively low amount of polysiloxane coating and nevertheless show a good surface migration and scratch resistance improvement efficiency. Typically, the solid weight fraction of particles in the coated particles can range between 30 and 95 weight % (relative to the total weight of the coated particles, the latter being the sum of the weight of the particles and the weight of the applied polysiloxane coating reactants). It was found that the minimum amount of coating required to achieve good scratch resistance improvement efficiency is dependent on the diameter of the particle. Typically, the particles have an average diameter between 4 and 100 nanometres and the solid weight fraction of the particles in the coated particles is between 30 and 90 w% the relative to the total weight of the coated particles. Good results were obtained with coated particles wherein the particles have an average diameter between 4 and 50 nanometres and wherein the solid weight fraction of the particles in the coated particles is between 50 and 95 w%. Preferably, the particles have an average diameter between 10 and 40 nanometres and the solid weight fraction of the particles in the coated particles is between 40 and 90 w%, most preferably, the particles have an average diameter between 10 and 30 nanometres and the solid weight fraction of the particles in the coated particles is between 30 and 85 w%.

In a preferred embodiment the coated particles according to the invention comprising nanosilica particles having a surface with hydroxy functional groups optionally partly esterified and a polysiloxane coating comprising a reaction product of polysiloxane disilanol according to formula I: 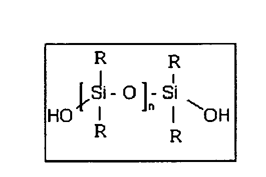 wherein n is 1 to 25, and wherein each R is a same or different hydrocarbon group having 1 - 4 carbon atoms, and as a coating crosslinker an alkoxysilane having the structure [R'O]ₘ―Si―[R"]₄₋ₘ wherein m = 3 or 4 and the average number of alkoxy groups m is between 2.5 and 4, and wherein R' and R" are hydrocarbon groups, which polysiloxane coating is at least partly grafted to the particle surface by reaction with the hydroxy functional groups on the particles, wherein the molar ratio of the coating crosslinker relative to the polysiloxane disilanol is between 2 and 0.1, wherein the particles have an average diameter between 4 and 50 nanometres and wherein the solid weight fraction of the particles in the coated particles is between 50 and 90 w% (relative to the total weight of the coated article) and wherein the hydrocarbon on the polysiloxane disilanol is an alkyl having 1 - 4 carbon atoms.

In line with the characteristic feature of the particles according to the invention to migrate to the surface of a polymer matrix, the invention also relates to the use of coated particles according to the invention in a polymer composition to improve the surface properties of the polymer composition. The particles in the coated particles according to the invention are chosen in view of their intended application. The coated particles according to the invention can be used to bring the functionality of the particle to the surface where it is more effective and due to which a more efficient use can be made of the coated particles (smaller amount needed for the same effect level). For example, the particles may contain compounds to protect polymer matrix against weathering, abrasion, UV radiation, oxidation, dirt, graffiti or may contain compounds and need to be accessible from the outside, for example pigments or marking compounds like laser marking compounds. The particles may be organic or inorganic. Preferably, the particles are chosen from the group of silica, alumina, titania and hybrids and/or mixtures thereof, glass, mineral or synthetic clay, zeolite and organic particles having hydroxyl groups on the surface of the particle.

In view of obtaining a high scratch resistance and car wash resistance in a coating, the particles in the coated particles preferably are silica particles. A further advantage of silica particles is that the polysiloxane disilanol is bonded to the silica particles over an [-Si-O-Si-] bond which is very hydrolytically stable. Furthermore, a silanol group is more reactive towards another silanol group then for example to an alcohol.

The invention also relates to a material composition comprising a polymer material and coated particles according to the invention, in particular to coating a composition comprising a polymer binder system and coated particles according to the invention. The polymer binder system preferably is an aqueous emulsion or dispersion of a polymer binder material, optionally with a crosslinking agent, but can also be a solvent borne coating composition or powder coating composition. In particular, the invention relates to a coating composition which is a clear coating composition having essentially no pigments for making a clear top coating finish or refinish. A particular advantage of the coating composition according to the invention, as opposed to the coating compositions according to WO 01/09260, is that it is very easy to refinish or recoat. This means that it is better suitable for applying a durable second top coating on top of a coating obtained from a coating composition according to the invention. The prior art coating composition according to WO 01/09260 requires addition of special additives, such as borates, to increase the polarity and improve re-coatability. It is considered that the excellent re-coatability is due to the relatively low amount of polysiloxane coating in the coated particles and the relatively low amount of coated particles required to achieve the desired level of scratch resistance.

Good results can be obtained if the coating composition according to the invention typically comprises between 0.1 and 20 wt.% of the coated particles according to the invention (relative to the total coating solids weight). Preferably, the coating composition comprises between 0.2 and 15 wt.%, more preferably between 0.5 and 10 wt.%, even more preferably between 1 and 7 wt% and most preferably between 2 and 5 wt.% coated particles according to the invention.

The invention further relates to a method for the preparation of coated particles according to the invention wherein a polysiloxane coating is grafted onto the particles by reacting, at elevated temperature, organic modified particles in an aprotic organic colloidal dispersion with
a) a polysiloxane disilanol according to formula I: 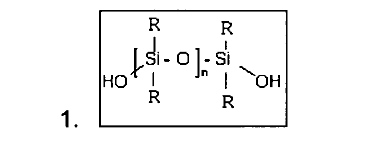 wherein n is 1 to 25, and wherein each R is a same or different hydrocarbon group and
b) a coating crosslinking group, preferably an alkoxysilane having the structure [R'O]m―Si―[R"]4-m wherein m = 2, 3 or 4 and R' and R" are same or different hydrocarbon groups.

Organic modified particles in an aprotic organic colloidal dispersion are sometimes commercially available. If it is not available that it can be prepared by replacing in a protic organosol, for example an ethoxylated particle dispersions in ethanol, the protic solvent with an aprotic solvent -, for example by distillation. Alternatively, in the method according to the invention the organic modified particles in an aprotic organic colloidal dispersion are preferably produced by:
a) Providing a particles dispersion in water (aquasol),
b) Converting the particles aquasol to an organosol by replacing the water by an organic solvent and reacting at elevated temperatures at least a part of the hydroxy functional groups on the surface of the particles with an organic group to make organic modified particles,
c) Providing to the organic modified particles an aprotic organic solvent to create an aprotic organic colloidal dispersion.

In a first step, the hydrophylic hydroxyl groups containing particles are converted to hydrofobic particles to create the stable dispersion in an organic medium. In this method the organic modified particles are preferably produced by at least partly esterifying the hydroxy functional groups on the surface of the particles with an alcohol. After the modification reaction the alcohol is preferably replaced by an aprotic solvent. The amount of a protic solvent is preferably less than 10 wt.%, preferably less than 5 wt%, more preferably less than 2 wt.% to prevent undesired reaction between the solvent and the silanol or coating crosslinking agent, in particular the alkoxysilane groups. As described above for the coated particle composition, also in the method according to the invention the alkoxy silane has an average number of alkoxy groups between 2.5 and 4. The molar ratio of the alkoxy silane relative to the polysiloxane disilanol is preferably between 2 and 0.8. The invention further relates to coated particles obtainable by the above described method.

The film forming binder system contains a crosslinkable resin and a crosslinker. The crosslinkable resin may be any crosslinkable resin suitable for use in an essentially solvent-based, organic all or not high-solids coating composition. Often such crosslinkable resins are referred to as " thermosetting resins". As used herein, the term "crosslinkable resin" is intended to include not only resins capable of being crosslinked upon application of heat but also those resins which are capable of being crosslinked without the application of heat. Examples of such crosslinkable resins include the generally known thermosetting acrylics and polyesters containing one or more functional groups selected from hydroxyl groups, carbamate groups, epoxy groups, carboxylic groups, anhydride groups and mixtures of any of the foregoing.

Acrylic resins refer to the generally known addition polymers and copolymers of acrylic and methacrylic acids and their ester derivatives, acrylamide and methacrylamide, and acrylonitrile and methacrylonitrile. Examples of ester derivatives of acrylic and methacrylic acids include alkyl acrylates and alkyl methacrylates such as ethyl, methyl, propyl, butyl, tert. butyl, hexyl, cyclohexyl, ethylhexyl, iso-bornyl and lauryl acrylates and methacrylates, as well as similar esters, having up to about 20 carbon atoms in the alkyl group. Also, hydroxyalkyl esters can readily be employed. Examples of such hydroxyalkyl esters include 2-hydroxyethyl acrylate, 2-hydroxypropyl acrylate, 3-hydroxypropylacrylate, 2-hydroxyethylmethacrylate, 2-hydroxypropyl methacrylate, 3-hydroxypropyl-methacrylate, 4-hydroxybutylmethacrylate, hydroxy-esters that are the reaction product of acrylic or methacrylic acid and caprolactone or its oligomers (CAPA), and mixtures of such esters having up to about 5 carbon atoms in the alkyl group. Where desired, various other ethylenically unsaturated monomers can be utilized in the preparation of acrylic resins, examples of which include: vinyl aromatic hydrocarbons optionally bearing halo substituents such as styrene, alpha-methyl styrene, vinyl toluene, alpha- chlorostyrene; non-aromatic monoolefinic and di-olefinic hydrocarbons optionally bearing halo substituents, such as isobutylene, 2,3-dimethyl-1- hexene, 1,3-butadiene, chlorethylene, chlorobutadine and the like; and esters of organic and inorganic acids such as vinyl acetate, vinyl propionate, isopropenyl acetate, vinyl chloride, allyl chloride, vinyl alpha chloracetate, dimethyl maleate and the like.
The above polymerizable monomers are mentioned as representative of the CH₂=C< containing monomers which may be employed; but essentially any copolymerizable monomer can be used.

Polyester resins are generally known and are prepared by conventional techniques utilizing polyhydric alcohols and polycarboxylic acids. Examples of suitable polyhydric alcohols include: ethylene glycol; propylene glycol; diethylene glycol; dipropylene glycol; butylene glycol; glycerol; trimethylolpropane; pentaerythritol; sorbitol; 1,6-hexanediol; 1,4-cyclohexanediol; 1,4-cyclohexanedimethanol; 1,2-bis(hydroxyethyl) cyclohexane and 2,2-dimethyl-3-hydroxypropionate. Examples of suitable polycarboxylic acids include: phthalic acid; isophthalic acid, terephthalic acid; trimellitic acid; tetrahydrophthalic acid; hexahydrophthalic acid; tetrachlorophthalic acid; adipic acid; azelaic acid; sebacic acid; succinic acid; maleic acid; glutaric acid; malonic acid; pimelic acid; succinic acid; 2,2-dimethylsuccinic acid; 3, 3- dimethylglutaric acid; 2,2-dimthylglutaric acid; ;maleic acid; fumaric acid; and itaconic acid. Anhydrides of the above acids, where they exist can also be employed and are encompassed by the term "polycarboxylic acid". In addition, substances which react in a manner similar to acids to form polyesters are also useful. Such substances include lactones such as caprolactone, propylolactone, and methyl caprolactone and hydroxy acids such as hydroxycaproic acid and dimethylol propionic acid. If a triol or higher hydric alcohol is used, a monocarboxylic acid such as acetic acid and benzoic acid may be used in the preparation of the polyester resin. Moreover, polyesters are intended to include polyesters modified with fatty acids or glyceride oils of fatty acids (i.e. conventional alkyd resins). Alkyd resins typically are produced by reacting the polyhydric alcohols, polycarboxylic acids, and fatty acids derived from drying, semi-drying, and non-drying oils in various proportions in the presence of a catalyst such as sulfuric acid, or a sulfonic acid to effect esterifcation. Examples of suitable fatty acids include saturated and unsaturated acids such as stearic acid, oleic acid, ricinoleic acid, palmitic acid, linoleic acid, linolenic acid and licanic acid.

Nonlimiting examples of especially in this invention suitable crosslinkable resin is any polyhydroxy group-containing polymer conventionally used in amino resin and/or polyisocyanates crosslinkable coating compositions. Particularly suitable polymers include polyols, hydroxy-functional acrylic resins containing pendant or terminal hydroxy functionalities, hydroxy-functional polyester resins containing pendant or terminal hydroxy functionalities, hydroxy-functional polyurethanes, polyurethane-modified polyester polyols, polyurethane-modified polyacrylate polyols, and mixtures thereof. The polyhydroxy group-containing polymer contains on average at least two, and preferably more than two, hydroxy groups per molecule. Preferred polyhydroxy group-containing polymers are those with an acrylic or polyester backbone.

The polyhydroxy group-containing polymers preferably have weight average molecular weights of at least 1,000 to about 2,000,000. Usually, the weight average molecular weight is between 2,000 and 1,000,000, more preferably between 2,000 and 800,000, and most preferably between 2,500 and 100,000. The weight average molecular weight depends on the application requirements, and methods to modify the molecular weight accordingly are known to the skilled man.

Preferably, the coating composition comprises a polymer having a hydroxy number of 20 to 300 mg KOH/g polymer and more preferably of 60 to 200 mg KOH/g polymer. Examples of commercially available and suitable polyhydroxy-containing polymers include, but are not limited to DORESCO® TA 39-21 acrylic resin (Dock Resins, Linden, N.J.), JONCRYL® 500 acrylic resin (S.C. Johnson & Sons, Racine, WI), ACRYLOID® AT-400 acrylic resin (Rohm & Haas, Philadelphia, PA), CYPLEX® 1531 polyester resin (Cytec Industries, West Paterson, NJ), CARGILL 3000 and 5776 polyester resins (Cargill, Minneapolis, MN), TONE® polyester resin (Union Carbide, Danbury, CT), K-FLEX® XM-2302 and XM-2306 resins (King Industries, Norwalk, CT), CHEMPOL® 11-1369 resin (Cook Composites and Polymers (Port Washington, WI), JONCRYL® 540 acrylic emulsion polymer (S.C. Johnson & Sons, Racine, WI), RHOPLEX® AC-1024 acrylic emulsion resin (Rohm & Haas, Philadelphia, PA), XC® 4005 water-reducible acrylic resin (Cytec Industries, West Paterson, NJ), CRYLCOAT® 3494 solid hydroxy-terminated polyester resin (UCB CHEMICALS USA, Smyrna, GA), RUCOTE® 101 polyester resin (Ruco Polymer, Hicksville, NY), JONCRYL® SCX- 800-A and SCX-800-B hydroxy-functional solid acrylic resins (S.C. Johnson & Sons, Racine, WI), ALFTALAT® AN 745 hydroxy-functional polyester resin, a product of Hoechst Corporation, and the like. Furthermore, short oil alkyds such as Setal® 84 - XX- 70, saturated polyesters such as Setal® 1703 - XX - 75 and Setal® 1715 - VX - 74, water borne urethane modified polyesters such as Setal® 6071 - AQ - 45, thermosetting acrylic polymers such as Setalux® 1389 - VX - 60, Setalux® 1756 - VV - 65, Setalux® 1757 - VV - 70, Setalux® 1760 - VB - 64, Setalux® 1770 VS-70, and Setalux® 1795 - VX - 74, acrylic polyols such as Setalux® 1753 - XS - 65 and Setalux® 1903 - BA -75, non-aqueous dispersions such as Setalux® 1801 - SS - 53, acrylic microgels such as Setalux® 1850 - SS - 50, water borne thermosetting acrylic polymers such as Setalux® 6100 - GR - 74, as well as the corresponding polymers which have been modified with a sag control agent such as Setal® 91703 - SS - 53, Setal® 91715 - SS - 55, Setalux® 91389 - VX - 45, Setalux® 91756 - VS - 60, Setalux® 91757 - VX - 60, Setalux® 91760 - SS - 53, Setalux® 91795 - VX - 60 can be used.

A coating composition comprising an epoxy-functional binder and a polyacid cross-linker reactive with the epoxy groups of the binder is known from e.g. US 4,703,101 and US 6,773,819. Epoxy resins are generally known and refer to compounds or mixtures of compounds containing more than one 1,2-epoxy group. The polyepoxides may be saturated or unsaturated, aliphatic, cycloaliphatic, aromatic or heterocyclic. Examples of suitable polyepoxides include the generally known polyglycidyl ethers of polyphenol and/or polyepoxides which are acrylic resins containing pendant and/or terminal 1,2-epoxy groups.

Addition polymerized resins containing epoxy groups may also be employed. These polyepoxides may be produced by the addition polymerization of epoxy functional monomers such as glycidyl acrylate, glycidyl methacrylate and allyl glycidyl ether optionally in combination with ethylenically unsaturated monomers such as styrene, alpha-methyl styrene, alpha-ethyl styrene, vinyl toluene, t-butyl styrene, acrylamide, methacrylamide, acrylonitrile, methacrylonitrile, ethacrylonitrile, ethyl methacrylate, methyl methacrylate, isopropyl methacrylate, isobutyl methacrylate and isobornyl methacrylate. The acid-functional polyester crosslinkers can be formed by the polyesterification of at least one polyalcohol with a stochiometric excess of at least one polycarboxylic acid.

Carbamate functional groups can be incorporated into the polymer prepared from polymerizable ethylenically unsaturated monomers by copolymerizing, for example the above-described ethylenically unsaturated monomers with a carbamate functional vinyl monomer such as a carbamate functional alkyl ester of methacrylic acid. Useful carbamate functional alkyl esters can be prepared by reacting, for example a hydroxyalkyl carbamate (which can be the reaction product of ammonia. and ethylene carbonate or propylene carbonate) with methacrylic anhydride.

Other useful carbamate functional vinyl monomers include, for instance, the reaction product of hydroxyethyl methacrylate, isophorone diisocyanate, and hydroxypropyl carbarnate; or the reaction product of hydroxypropyl methacrylate, isophorone diisocyanate, and methanol. Still other carbamate functional vinyl monomers may be used, such as the reaction product of isocyanic acid (HNCO) with a hydroxyl functional acrylic or methacrylic monomer such as hydroxyethyl acrylate, and those monomers described in U.S. Patent No. 3,479,328, which is incorporated herein by reference.
Carbamate functional groups also can be incorporated into the acrylic polymer by reacting a hydroxyl functional acrylic polymer with a low molecular weight alkyl carbamate such as methyl carbamate. Pendant carbarnate groups also can be incorporated into the acrylic polymer by a "transcarbamoylation" reaction in which a hydroxyl functional acrylic polymer is reacted with a low molecular weight carbamate derived from an alcohol or a glycol ether. The carbamate groups can exchange with the hydroxyl groups to yield the carbarnate functional acrylic polymer and the original alcohol or glycol ether.
Also, hydroxyl functional acrylic polymers can be reacted with Isocyanic acid to provide pendent carbamate groups. Likewise, hydroxyl functional acrylic polymers can be reacted with urea to provide pendent carbamate groups.

Carbamate functional polyesters can be prepared by first forming a hydroxyalkyl carbamate that can be reacted with the polyacids and polyols used in forming the polyester. Alternatively, terminal carbamate functional groups can be incorporated into the polyester by reacting isocyanic acid with a hydroxy functional polyester. Also, carbamate functionality can be incorporated into the polyester by reacting a hydroxyl polyester with a urea. Additionally, carbamate groups can be incorporated into the polyester by a transcarbamoylation reaction. Preparation of suitable carbarnate functional group-containing polyesters are those described in U.S. Patent No. 5,593, 733 at column 2, line 40 to column 4, line 9, which portion is incorporated herein by reference. Carbamate functional binders are used in amino resin crosslinkable coating compositions.

When desired, generally known crosslinking agents can be incorporated in a composition of the invention particularly when the crosslinkable resin comprises a thermosetting resin containing active hydrogen functionality.
As will be appreciated by one skilled in the art, the choice of crosslinking agent depends on various factors such as compatibility with the film-forming resin, the particular type of functional groups on the film-forming resin and the like. The crosslinking agent is used to crosslink the film-forming resin by either condensation reactions or non-free radical additon reactions or a combination of both of these. When for example the thermosetting reactants can be crosslinked in the presence of moisture or when the reactants include monomers having complementary groups capable of entering into crosslinking reactions, the crosslinking agent may be omitted if desired.
Representative examples of crosslinking agents include blocked and/or unblocked diisocyanates, poly-isocyanates, diepoxides, aminoplasts, carbamates, cyclic carbonate groups, and anhydride groups. Examples of such compounds include melamine formaldehyde resin (including monomeric or polymeric melamine resin and partially or fully alkylated melamine resin), urea resins (e.g., methylol ureas such as urea formaldehyde resin, alkoxy ureas such as butylated urea formaldehyde resin), polyanhydrides (e.g., polysuccinic anhydride).

Aminoplasts can be obtained from the condensation reaction of formaldehyde with an amine or amide. Nonlimiting examples of amines or amides include melamine, urea, or benzoguanamine. While the aldehyde used is most often formaldehyde, other aldehydes such as acetaldehyde, crotonaldehyde, and benzaldehyde can be used.
The aminoplast contains imino and methylol groups and in certain instances at least a portion of the methylol groups are etherified with an alcohol to modify the cure response. Any monohydric alcohol can be employed for this purpose including methanol, ethanol, n-butyl alcohol, isobutanol, and hexanol. For instance Setamine ® US 138 BB-70 is a butylated formaldehyde/melamine resin ex Nuplex Resins. Further useful crosslinking agents are polymeric melamine is which are at least partly etherified with methanol and mixed ethers with methanol or ethanol or with (iso)butanol.

Other curing agents suitable for use include, but are not limited to, polyisocyanate curing agents. As used herein, the term "polyisocyanate" is intended to include blocked (or capped) polyisocyanates as well as unblocked polyisocyanates. The polyisocyanate can be an aliphatic or an aromatic polyisocyanate, or a mixture of the foregoing two. Diisocyanates can be used, although higher polyisocyanates such as isocyanurates of diisocyanates are often used. Higher polyisocyanates also can be used in combination with diisocyanates. Isocyanate prepolymers, for example reaction products of polyisocyanates with polyols also can be used. Mixtures of polyisocyanate curing agents can be used.
If the polyisocyanate is blocked or capped, any suitable aliphatic, cycloaliphatic, or aromatic alkyl monoalcohol known to those skilled in the art can be used as a capping agent for the polyisocyanate. Other suitable capping agents include oximes and lactams. Other optional blocked isocyanate compounds are based on the adducts of polyisocyanates, e.g., biurets, isocyanurates, imino-oxadiazinediones, allophanates, uretdiones, and mixtures thereof. Examples of such adducts are the adduct of two molecules of hexamethylene diisocyanate or isophorone diisocyanate to a diol such as ethylene glycol, the adduct of 3 molecules of hexamethylene diisocyanate to 1 molecule of water, the adduct of 1 molecule of trimethylol propane to 3 molecules of isophorone diisocyanate, the adduct of 1 molecule of pentaerythritol to 4 molecules of toluene diisocyanate, the isocyanurate of hexamethylene diisocyanate, available from Bayer under the trade designation Desmodur® N3390, a mixture of the uretdione and the isocyanurate of hexamethylene diisocyanate, available from Bayer under the trade designation Desmodur® N3400, the allophanate of hexamethylene diisocyanate, available from Bayer under the trade designation Desmodur® LS 2101, and the isocyanurate of isophorone diisocyanate, available from Hüls under the trade designation Vestanat ® T1890. Furthermore, (co)polymers of isocyanate-functional monomers such as α,α '-dimethyl-m-isopropenyl benzyl isocyanate are suitable for use. Finally, as is known to the skilled person, the above-mentioned isocyanates and adducts thereof may be at least partly present in the form of blocked isocyanates.

Other useful curing agents comprise the tricarbamoyl triazine compounds described in detail in U.S. Patent No. 5,084,541, which is incorporated by reference herein. In epoxy resins acid hardening agents can be used such as additols.

Optionally the coating compositions can comprise other additives like catalysts, sag control agents, UV-absorbers, flow enhancers, is film formation improvers etc.

As starting material the inorganic nanoparticles can, for example, comprise a a single inorganic oxide such as silica or alumina, or an inorganic oxide core of one type on which is deposited an inorganic oxide of another type. However, the inorganic nanoparticles suitable for coating compositions of the present invention ordinarily are essentially colorless so as not to seriously interfere with the light transmissive characteristics of the coating compositions when unpigmented. A particularly desirable class of substantially inorganic nanoparticles for compositions of the present invention includes sols of a wide variety of small-particle, amorphous silicas having an average particle diameter ranging from about 1 to about 150 nanometers (nm), preferably from about 1 to about 100 nm, and most preferably from about 3.5 to about 50 nm.
A common method for making silicas having an average particle size ranging from about 1 to about 150 nm employs preparation of the silica in an aqueous medium to produce a hydrosol of silica. Silica hydrosols or aquasols may be prepared for example by partially neutralizing an aqueous solution of an alkali metal silicate, ordinarily sodium silicate, with acid to a pH typically of about 8 to about 9 such that the resulting sodium content of the solution ordinarily is less than about 1 percent by weight based on sodium oxide. A somewhat different, less common approach involves reacting the aqueous sodium silicate solution with sufficient acid to make an acidic sol and precipitating the sodium salt in a strongly acidic medium. This alternate approach makes use of the property that polysilic acid is temporarily stable at about a pH of 2, and if the sodium salt of the acid used for neutralizing the sodium silicate is sufficiently insoluble, it can be precipitated and separated. Once the salt is separated from the acidic sol, the sol can be alkalinized to grow colloidal particles and stabilize the product or can be employed in other known processes of growing silica particles to the desired size. Typically a heating step is involved in these processes since temperature is a well known variable for controlling the particle size of the silica product. Representative preparations of silica aquasols are contained in the following literature which is hereby incorporated by reference: U.S. Pat. Nos. 2,244,325; 2,375,738; 2,574, 902; 2,577,484; 2,577,485; 2,750,345; 3,012,973; 3,440,174; 3,538,015; 3, 673,104; 3,714,064 and THE CHEMISTRY OF SILICA by Ralph K. ller, copyright 1979, pages 172-176 and 331-343. Aquasols of silica can be used as starting materials for the preparation of surface modified silicas. The colloidal dispersions are marketed for instance by Akzo Nobel under the trade names Bendzil and Nyacol. Especially the Nyacol 2034 DI appeared in the invention to be excellently applicable. This Nyacol 2034 DI is an opalescent aquasol of nanosilica with a solid content of 34 % and a pH of 2.5. Specific surface area is 180 to 200 m²/g; particle range is 10 to 20 nm with a mean diameter of 16 nm. As on silica 4.6 Silanol groups per nm² are expected, one calculates that about 1.45 mmols of silanol groups/per g of solid nanosilica are present at the surface.

Another method for preparing silica sols having uniform spherical silica particles of controlled particle size by hydrolyzing a lower alkoxysilane like tetraalkylorthosilicate in an alcohol medium containing suitable amounts of water and ammonia has been described by Stober et al in the JOURNAL OF COLLOID AND INTERFACE SCIENCE, Volume 26, pages 62-69 (1968) the disclosure of which is hereby incorporated by reference. Such sols likewise can be used as starting materials for preparation of the surface modified silicas.

During the first modification step of the present invention the silica nanoparticles are brought in the form of a colloidal dispersion of the silica in an alcohol such as a lower monohydric alcohol examples of which include methanol, ethanol, n-propanol, n-butanol, Techniques for preparing such dispersions of colloidal silica in alcohols are well known see the following literature which is hereby incorporated by reference: US 3,351,561; US 3,948,799; DE 1926908; US 19580213; US 2,801,185;US patent 3,336,235. Ossenkamp et al in Langmuir, 18, 5749 (2002) and Chem..Mater. 13, 3975 (2001).

Such dispersions are often prepared by controlled addition of an aqueous silica sol to the alcohol while simultaneously removing water for example by an azeotropic distillation at a temperature at least sufficient to effect to some extent a chemical reaction between the hydroxyl groups of the alcohol and silanol groups (Si-OH) of the colloidal silica. The products are sometimes referred to as alcosols and contain silica particles having chemically modified surfaces.

Another method to partially esterify with monoalcohol is described in US 3004920. Here dialkoxy ketals such as dimethoxypropane are applied to convert nanosilica aquasol into an organosol comprising alcohol and ketones as liquid carrier.

As said above the method of synthesis to come to the colloidal dispersion of nanoparticles in the coating composition comprises as first step the preparation in an aprotic solvent of an organosol of partially at the surface with monoalcohol esterifed nanoparticles. This means that at the end of the preparation of the partially esterified nanoparticles the alcohol and optionally second carrier - low boiling types - is to be exchanged by distillation for an aprotic solvent like ketones (e.g. 2-heptanone), butylacetate, xylene, all boiling at higher temperature than the applied alcohol containing preferably 4 carbons at the maximum. The aprotic solvent should also provide a good compatibility of the esterified nanosilica and so, good colloidal stability as dispersion and furthermore permit in the second step a further derivatisation with siloxane and silanes without loss of the colloidal stability. In this context 2-heptanone appeared to be a very suitable aprotic solvent.

Having prepared in a first step the nano silica, partially esterified with short monoalcohol, in an aprotic solvent with a boiling point higher than 120°C at normal pressure, the second step follows by adding to the colloidal dispersion a mixture of polydimethylsiloxane disilanol with the following structure 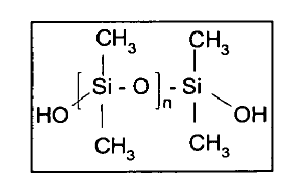 whereby the average n is less than 25, preferentially less than 10, most preferentially less than 5, and silanes with the following structure : [RO]ₙ―Si―[CH3]₄₋ₙ wherein n= 1,2,3 or 4 and R = alkyl with at the maximum 3 carbons and optionally a catalyst like dibutyltindilaurate to promote under heating silanol (Si-OH) and Si-alkoxy condensation under the formation of alcohol and water.

The solid weight fraction of nanoparticles on the applied total of nanoparticles and Siloxane (i.e. the polydimethylsiloxane disilanol) and Silane compounds is at least 50 %. The applied weight of the polydimethylsiloxane disilanol is hereby higher than that of the silane.
Preferably the silane [RO]n―Si―[CH3]4-n is a tetraalkoxysilane (such as tetraethoxysilane) and the polydimethylsiloxane disilanol has an average n of 2.5 to 3.5. Molar ratio of the tetraalkoxysilane relative to polydimethylsiloxane disilanol is between 2 to 0.1, preferably between 1.5 and 0.8 and most preferably between 1.2 and 0.8. Polydimethylsiloxane disilanol with a mean n of 3 to 4 and a weight % OH of 8.1 to 12.3 is commercially available from Dow Corning under the tradename DowCorning® 4-7041 INT short chain diol.

During the reaction under heating the mixture mostly between 40 and 150°C alcohol is removed and at the end of the reaction a part of the aprotic solvent can be removed in order to concentrate the opalescent colloidal dispersion.

It should be emphasized that the same reaction but in the absence of nanoparticles leads to a polysiloxane condensate which causes severe problems when applied as such or together with only esterified nanosilica in coatings compositions. Haziness, turbidity and bad wetting are then namely observed for cured films. This is not the case when the modification of the nanoparticles according to the invention is carried out and this proves that a modification of the nanosilica comprises a grafting reaction of the hydrophobic silicon compounds on the surface of the nanoparticles. With Transmission Electron Microscopy (TEM) and Secondary Ion Mass Spectroscopy (SIMS) moreover it can be shown that the grafting of the nanosilica with the silicon compounds prepared according to the invention leads to clear coatings exhibiting a concentration of particles within the surface region of the cured composition being greater than the concentration in the bulk region of the cured composition.

The colloidal dispersion of modified nanoparticles is "cold-blended" with the solution of the binder crosslinkable to a long term stable colloidal dispersion with a clear to opalescent appearance. This at due time can be further formulated with crosslinking agent, further solvent, additives to a clear solution to a complete coating composition. The weight percentage of modified nanoparticle solids on total coating solids will be between 0.1 and 15, preferably between 0.1 and 10, and highly preferably between 0.1 and 5 %.

The coating compositions may include a catalyst or a blocked catalyst to enhance the cure reaction. Suitable catalysts applied for the curing of hydroxy- and or carbamate functional binders with aminoresins are well-known in the art and include, for example, *p*-toluenesulfonic acid, dinonylnaphthalene disulfonic acid, dodecyl-benzenesulfonic acid, phenyl acid phosphate, monobutyl maleate, butyl phosphate, blocked dodecylbenzenesulfonic acid, and hydroxy phosphate ester.
The catalyst is present in an amount sufficient to accelerate the reaction. Non-limiting examples of suitable catalysts for reactions between isocyanate groups and hydroxyl groups include tin catalysts such as dibutyl tin dilaurate. Non-limiting examples of epoxy acid base catalysts include tertiary amines such as N,N'-dimethyldodecyl amine catalysts. In another embodiment, the catalyst can be a phosphatized polyester or a phosphatized epoxy. The catalyst can be present, when added to the other components which form the coating composition, in an amount ranging from 0.1 to 5.0 percent by weight, and is typically present in an amount ranging from 0.5 to 1.5 percent by weight based on the total weight of the resin solids of the components which form the coating composition. The amount of catalyst may range between any combination of these values inclusive of the recited values.

In another embodiment, additional components can be present during the formation of the coating compositions as previously described. These additional components include, but are not limited to, flexibilizers, plasticizers, levelling aids (such as, for example polyacrylates marketed by Byk Chemie under e.g. the tradename Byk 358), thixotropic agents, anti-gassing agents, organic cosolvents, flow controllers, hindered amine light stabilizers, anti-oxidants, UV light absorbers, coloring agents or tints, and similar additives conventional in the art, as well as mixtures of any of the foregoing can be included in the coating composition. These additional ingredients can present, when added to the other components which form the coating composition, in an amount up to 40 percent by weight based on the total weight of the resin solids of the components which form the coating composition.

The coating composition of the invention comprises an organic solvent as it is desirable that the composition is in a substantially low viscous liquid state enabling e.g. easy spraying. Examples of useful organic solvents include methyl ethyl ketone, methyl isobutyl ketone, 2-heptanone, *n*-amyl acetate, ethylene glycol butyl ether acetate, propylene glycol monomethyl ether acetate, xylene, n-butylacetate, n-butanol, or blends of aromatic hydrocarbons like Solvesso 100. The liquid coating compositions can readily be prepared via methods and in relative amounts which are recognisable to those of ordinary skill in the art in the relevant field, depending on the particular end use chosen. At most, the solvent may be present in an amount of about 99 weight percent based on the total weight of the composition, preferably of at most about 60 weight percent, and more preferably of at most about 50 weight percent.

The coating compositions of the present invention can be solvent-based coating compositions, water-based coating compositions (such as water borne secondary emulsions), in solid particulate form, that is, a powder coating composition, or in the form of a powder slurry or aqueous dispersion. The components of the present invention used to form the cured compositions of the present invention can be dissolved or dispersed in an organic solvent. Suitable powder clearcoats are described in U. S. Patent No. 5,663,240, which is incorporated herein by reference, and include epoxy functional acrylic copolymers and polycarboxylic acid curing agents. Further coating compositions of the invention can be non solvent-based but in the liquid form coating composition such as UV curable acrylated resins or monomers and peroxide curable unsaturated (maleic anhydride) based polyesters/styrene blends.

Said coating compositions according to the invention after curing yield clear films with high film hardness, good polishability, good resistance to water and organic solvents, good durability, and good acid etch resistance. A major advantage of the according to the invention modified nanoparticles in the cured clear films is that the dry and/or the wet scratch resistance are significantly improved with low amounts of modified nanoparticles, even as low as below 10 wt.%; even sometimes with only a very small amount of modified particles of below 2 wt.%. Connected to that is the enrichment of the nanoparticles at the surface. This appears to play an important role on the scratch resistance. The Silicium containing compounds (Polydimethylsiloxane disilanol and preferably the tetra-alkoxy silane) applied for the intended and proven chemical modification of the nanoparticles are moreover inexpensive chemicals. An extra advantage is that the recoating of a cured coating with the same coating composition shows no visual problem like dewetting. Probably this is the result of the effective grafting of a the silicium compounds on the nanoparticles and then in a weight ratio of silicium compounds relative to silica being less than 50 %.

The curable coating compositions according to the present invention have utility in coatings, such as automotive coatings, general industrial coatings, baked enamels, and wood finishes. They are also usable as moulding and adhesive compositions. Especially the invention relates to the use of said coating composition as a pigment-free top coat or a clear coat in the finishing and refinishing of articles, for example motorcycles, cars, trains, buses, trucks, and aeroplanes. Also in solid top-coats including pigments the curable compositions are applicable.

The composition of the invention is applicable as a clear and/or colourless coating composition over a pigmented base coat as part of a composite colour-plus-clear coating. Such composite coatings are popular for their depth of colour and liquid glossy surface appearance. They have found particularly wide acceptance in the field of automotive coatings.

The coating compositions of the present invention can be coated on the article by any of a number of techniques well-known in the art. These include, for example, spray coating, dip coating, roll coating, curtain coating, and the like. For automotive body panels, spray coating is preferred. After contacting the substrate and the coating composition, the solvent is allowed to partially evaporate to produce a uniform coating on the substrate. Subsequently, the compositions can be subjected to conditions to cure the coating layers.

Various methods of curing may be used depending on the type of crosslinking chemistry and type of application. For instance, for automotive heat curing is effected by exposing the coated article to elevated temperatures provided primarily by radiative heat sources. Curing temperatures will vary depending on the aminoplast or polyisocyanate and functional polymer used; however, they generally range between 70°C and 190°C and are preferably between 110°C and 160°C, most preferably between 125°C and 150°C. The curing time will vary depending on the particular components used and physical parameters such as the thickness of the layers; however, typical curing times range from 15 to 60 minutes. For car refinishes where polyisocyanate as crosslinker is mostly applied, forced drying conditions e.g. at 60°C for 20 up to 60 minutes and a 7 day period at ambient temperatures are normal curing conditions.

The present invention is elucidated by means of the following non-limiting Examples.

Coating compositions were spray applied to electrocoated steel panels or Q-panels coated with a commercial primer and a commercial dark blue base coat. The base coat was applied in two layers with a 1 minute flash-off between the layers. The coating composition was applied after 5 minutes flash-off, also in two layers. After 10 minutes flash-off the complete system was baked for 30 minutes at 140°C.

Gloss was measured in a conventional way using a Dr. Lange glossmeter LMG 070 or a Byk Haze-Gloss 4601 glossmeter (reference is made to ISO 2813) and is expressed in Gloss units (GU).

The car wash resistance was determined with the aid of a mini-car wash device according to Renault specification RNUR 2204 - C.R. PO N° 2204. In this test the coated panel is subjected for 10 minutes to a rotating washing brush similar to the ones used in a commercial car wash. During this operation a slurry of aluminium oxide paste Durmax 24H from Prolabo Paris is continuously sprayed over the panel. The loss of gloss is taken as a measure of the car wash resistance. The Observed Loss of Gloss is defined as follows: Observed Loss of Gloss = (initial gloss - final gloss)/initial gloss * 100%. The Initial gloss is defined as the gloss of the cured coating before the car wash test. The Final gloss is defined as the gloss of the cured coating after the car wash test. Gloss was measured in accordance with ISO 2813 using a Haze Gloss apparatus from Byk Gardner GmbH. The time elapsed between the car wash test and the loss of gloss measurement was about 1-3 hours. All samples were stored at room temperature between the car wash test and the gloss measurement.

The Rota Hub method was developed by Bayer Ltd, Germany, to, measure the scratch resistance under dry conditions. The gloss data were obtained with a reflectometer from Byk-Gardner. The parameters for the scratch tests are the following:
Speed in X and Y direction Vx / Vy = 15/15 mm/min; Speed of rotation w = 5.0 U/s; Disc radius r= 35 mm; Rub material: copy paper
The gloss 20° is determined before and after scratch.

### Colloidal dispersions of Monoalcohol esterified nanosilica

### Example A. methyl-nanosilica in 2-heptanone

200 g of Nyacol2034 DI containing 34 b.w.% colloidal silica, with a mean diamter of 16 nm, in water was mixed with 900 g of dimethoxypropane and stirred overnight at room temperature. The following day the nearly clear solution was concentrated under reduced pressure at room temperature by distilling off acetone and methanol until a mass of 300 g. After adding 250 g of 2-heptanone the acetone and the methanol were further removed from the mass until a weight of 300 g was reached. For a last time 250 g of heptanone was then added and the mass was concentrated to 300g opalescent dispersion under reduced pressure and some heating. The solid content found after 1 hour at 140°C was 23.40 %. With elemental analysis the carbon content of the dried methyl-silica was determined to be 0.94 % indicating that the silanol groups were partially converted into methoxy - silicium groups.

### Example B. butyl-nanosilica in 2-heptanone

100 g of Nyacol2034 DI was brought together with 300 g of ethanol and 200 g of n-butanol. From the mixture water was azeotropically removed by distillation under reduced pressure at 30°C until a mass of 150 g of the colloidal dispersion was reached. 150 g heptanone was then added and the mass was again concentrated to 150 g. Once more the same operation was performed to get a bluish colloidal dispersion of butyl-silica in 2-heptanone with a solid content (after 1 hour at 140°C) of 22.7 %. With elemental analysis the carbon content of the dried methyl-silica was determined to be 1.5 % indicating that the silanol groups were partially converted into butoxy - silicium groups.

### Colloidal dispersions of nanosilica modified with a blend of α, Ω- silanol terminated polydimethylsiloxane (= PDMS) and tetra-alkoxy silane

### Example AA methyl-nanosilica grafted with PDMS and tetraethoxy silane

120 g of the methyl-nanosilica product made in example A was mixed with 5.48 g of Dow Corning@ DC 4-7041 short chain diol (i.e. Polydimethylsiloxane disilanol with a mean n of 3 tot 4 and a weight % OH of 8.1 to 12), 3.40 g of tetraethoxysilane and 3.0 g of 2% solution of dibutyltindilaurate in 2-heptanone. After heating overnight at 45°C the mixture was concentrated by distilling off the alcohol and partly the 2-heptanone. After filtration over a paper filter 98 g of colloidal dispersion of modified nanosilica was obtained. Found solid content (after 1 hour at 140°C) was 30.9 %

### Example BB butyl-nanosilica grafted with PDMS and tetraethoxy silane

119.1 g of the butyl-nanosilica product made in example B was mixed with 5.48 g of Dow Corning@ DC 4-7041 short chain diol, 3.41 g of tetraethoxysilane, 0.9 g 2-heptanone and 3.0 g of 2% solution of dibutyltindilaurate in 2-heptanone. The mixture was stirred and heated at 130 to 135°C for about 2 hours. Then the mixture was cooled down to 80°C and ethanol and partially the 2-heptanone were removed under reduced pressure at 80°C. After cooling down the mass was filtrated over a paper filter to remove some solid material and 96 g of a clear colloidal dispersion of modified nanosilica was obtained. Found solid content (after 1 hour at 140°C) was 31.2 %

### Comparative example CC. Reaction product of α, Ω- silanol terminated polydimethylsiloxane (= PDMS) with tetra-alkoxy silane in the absence of particles

### Comparative Example CC

120 g of 2-heptanone was mixed with 5.48 g of Dow Corning@ DC 4-7041 short chain diol, 3.41 g of tetraethoxysilane and 3.0 g of 2% solution of dibutyltindilaurate in 2-heptanone. The mixture was stirred and heated at 130 to 135°C for about 2 hours. Then the mixture was cooled down to 80°C and ethanol and partially the 2-heptanone were removed under reduced pressure at 80°C. After cooling down 93.1 g of a clear solution of polydimethylsiloxane reaction product was obtained with a found solid content (after 1 hour at 140°C) of 3.0 %.

### Comparative Example DD: Colloidal dispersions of nanosilica treated with a carbamate functional silane

### Comparative Example DD

The Carbamate Silane Coupling Agent was first made by the dropwise addition of 59 g of hydroxypropylcarbamate (i.e. Carbalink HPC from Huntsman) in 7 g of 2-heptanone to a mixture of 124 g 3-isocyanatopropyltriethoxysilane, 96 g of 2-heptanone and 2 g of a 4% dibutyltindilaurate solution in 2-heptanone heated at 40°C. At the end of addition the mixture was stirred further at 40°C for 2 hours and at 60°C for 3 hours until the isocyanate conversion was determined to be 99 %. 7 g of methanol was finally added to kill any residual isocyanate groups. Found solid content of the Carbamate Silane Coupling agent solution was 48%.

100 g of the organosol prepared in the example A, 100 g of 2-heptanone and 4.8 g of the Carbamate Silane Coupling agent solution were brought together and stirred for 1 night at 80°C. The found solid content of the clear colloidal dispersion was 12.3 %.

107.3 g of the obtained dispersion was mixed with 26.56 g of Setalux® 1760 VB-64 to a clear solution and susequently concentrated by evaporation under reduced pressure to 62.6 g clear premix solution containing 17 g Setalux® 1760 and 13.2 g carbamated nanosilica, both on solid base.

### Example 1

For the paint formulations firstly a premix was made from 136.72 g of polyacylate polyol Setalux® 1760 VB-64 from Nuplex Resins, 53.57g of the aminoresin Setamine® US 138 BB-70 from Nuplex Resins, 41 g of MAK and 0.63 g of 10% Byk®-331 solution in MAK.
To 46.4 g premix, 0.10 g Byk® -358 and 5.60 g MAK was added to bring the reference formulation without any nanosilica on a solid content of 48 %.
To 46.4 g premix, 0.12 g Byk® -358 and 10.30 g colloidal dispersion of example AA was added to a formulation possesing a solid content of 48 % and with an amount of 10 % nanosilica on the total amount of solids.

Coating compositions were spray applied to Q-panels coated with a commercial primer and a commercial dark blue base coat. The base coat was applied in two layers with a 1 minute flash-off between the layers. The coating composition was applied after 5 minutes flash-off, also in two layers. After 10 minutes flash-off the complete system was baked for 30 minutes at 140°C. Car wash resistance was determined according to the Renault method discussed above. The results hereof are summarized in the following Table.

| | Reference Formulation without nanosilica | Formulation with 10 % modified nanosilica of example AA |
|---|---|---|
| Initial Gloss 20° | 96 | 89 |
| Haze | 18 | 22 |
| After carwash | 77 | 80 |
| End Gloss 20° | | |
| Delta loss of gloss 20° | 19 | 9 |
| % loss of gloss 20° | 20 | 10 |

Transmission Electron Micrographs (TEM) of the cross-section of the cured clear coat wherein 10 % nanosilica reveal that particles are found enriched at the surface being the air-surface of the coated substrate and which has a thickness generally extending perpendicularly from the surface of the cured coating to a depth ranging from at least a couple of nanometers to about 50 nm. Also the Si profile obtained with SIMS shows the enrichment.

### Comparative Example 2

38.67 g of the premix of the comparative example DD was mixed with 6.44 g of Setamine US-138 BB-70, 0.68 g of a 10 % Byk-358 in 2-heptanone and 0.45 g of a 10 % Byk-331 in 2-heptanone. The weight % of carbamated nanosilica solid on total solids was 19 %. Ratio Setalux to Setamine on solid base is 70 to 30 respectively.

As reference 43.76 g of Setalux® 1760 VB-64 was mixed with 17.14 g of Setamine US-138 BB-70, 1.46 g of a 10 % Byk-358 in 2-heptanone, 0.90 g of a 10 % Byk-331 in 2-heptanone, 5 g of butylglycolacetate and 16 g of Solvesso.

Films and carwash experiments were made in the same way as for as for example 1.

| | Reference Formulation without nanosilica | Formulation with 19 % modified nanosilica of comp. example DD |
|---|---|---|
| Initial Gloss 20° | 96 | 94 |
| After carwash | 78 | 73 |
| End Gloss 20° | | |
| Delta loss of gloss 20° | 18 | 21 |
| % loss of gloss 20° | 19 | 23 |

This material prepared according to the state of the art (BASF patent US 5,853,809) contains nanosilica being chemically modified with a coupling agent enabling the reaction of the carbamate groups with the aminoresin being part of organic polymeric network. Although the dry scratch resistance might be improved by the use of such nanosilica, from the presented results it is obvious that this route does not lead to a better car wash scratch resistance. Study with TEM reveals that the particles are homogenously divided over the cured film

### Example 3.

A first premix was made from 133.33 g of Setalux 1770® VS-70, 57.20 g of Setamine® US138 BB-70, 2.67 g of Nacure® 5225 (being an amine blocked strong acid from King Industries) and 83.20 g of 2-heptanone. Premix B comprises 100g of Setalux 1770® VS-70, 50 g of 2-heptanone, 38 g of example BB dispersion, 42.8 g of Setamine® US138 BB-70 and 2 g of Nacure® 5225.
The premix A was used to make with premix B 1 pack formulations containing 0 up to 5 % modified nanosilica prepared according to example BB see table for compositions and dry scratch resistance results according to the Rota Hub method. The films were applied and cured in the same way as for as for example 1.

| | 0% silica (Reference) | 1% silica | 3% Silica | 5% Silica |
|---|---|---|---|---|
| Compositions | | | | |
| Premix A | 80 | 72.53 | 57.61 | 42.68 |
| Premix B | 0 | 7.47 | 22.39 | 37.32 |
| Byk-358 | 0.17 | 0.17 | 0.17 | 0.17 |
| 10 % Byk 331 in 2-heptanone | 0.20 | 0.20 | 0.20 | 0.20 |

| Rota Hub Results | | | | |
|---|---|---|---|---|
| Initial Gloss 20° | 88.92 | 89.24 | 89.5 | 89.5 |
| After carwash | 86.08 | 89.86 | 88.98 | 87.84 |
| End Gloss 20° | | | | |
| Delta loss of gloss 20° | 2.84 | -0.62 | 0.52 | 1.66 |
| % loss of gloss 20° | 96.8 | 100.7 | 99.4 | 98.1 |

From the in the in table presented one concludes that the Setalux 1770® 1 pack clear coating being already intrinsically very scratch resistance under dry and wet conditions can be made completely scratch resistant with only 1 % nanosilica prepared according to the invention. Enrichment of nanosilica at the surface is also shown here with TEM and SIMS.

### Example 4

Setalux 1903® BA-75 is a polyacrylate polyol mostly applied with polyisocyanate in 2 pack systems for car refinishes.
To 65.7 g of modified nanosilica of example BB, 27 g 2-heptanone and 240 g Setalux® 1903 BA-75 is added to get a bluish, clear premix solution with a solid content of 60 %.
To 10 g of the premix, 1 g butylacetate, 0.4 g of 10 %Byk-358 in 2-heptanone, 0.26 g of 1% dibutyltindilaurate (DBTL) in butylacetate and finally 2.64 g of Tolonate ® HDT LV (i.e. the isocyanurate of hexamethylene diisocyanate) from Rhodia was added. Molar amount of hydroxy and isocyanate groups were equivalent. The content of nanosilica on total silica was 6.9 %.
Films with a thickness of 90 microns were drawn on Q-pannels and glass plates and after a flash of 10' at room temperature treated for 30' at 60°C and subsequently for 1 week at room temperature. Films were clear and the car wash scratch resistance was better than found for the reference without silica.

### Comparative examples 5A, 5B and 5C

In the comparative examples films made from three different compositions were compared with a film made in the example 4. Compositions are presented in the hereunder given Table. Films were drawn on Q-pannels and glass plates and after a flash of 10' at room temperature treated for 30' at 60°C and subsequently for 1 week at room temperature.
One sees that the modification reaction of the butyl-nanosilica with a blend of Dow Corning@ DC 4-7041 short chain diol (i.e. PDMS) and TEOS is essential to get a good result i.e. good appearance, enrichment of silica at the surface. First reaction of PDMS and TEOS in the absence of particles gives a polysiloxane product. This creates on addition to the coating composition all or not in the presence of separately added butyl-nanosilica problems such bad wetting behaviour and turbidity. Formulation the butyl-nanosilica with PDMS and TEOS leads to clear films but no enrichment of the particles to the surface and no improvement of the scratch resistance.

| **Example** | **5A** | **5B** | **5C** | **4** |
|---|---|---|---|---|
| ***Composition*** | | | | |
| *Setalux 1903* | 7.2 | 7.2 | 7.2 | 7.2 |
| *Polysiloxane Comparative Example CC* | 2.8 | 2.8 | - | - |
| *Butyl-silica Example B* | - | 2.6 | 2.6 | - |
| *Dow Corning® DC 4-7041 short chain diol,* | | - | 0.174 | - |
| *TEOS* | | - | 0.106 | - |
| *Modified silica acc. the invention. Example BB* | - | - | - | 2.0 |
| *Butylacetate* | - | - | - | 1.8 |
| *10 %Byk 358 in heptanone* | 0.4 | 0.4 | 0.4 | 0.4 |
| *1% DBTL in Butylacetate* | 0.26 | 0.26 | 0.26 | 0.26 |
| *Tolonate HDT LV* | 2.64 | 2.64 | 2.64 | 2.64 |
| *% silica on total solids* | 0 | 6.5 | 6.5 | 6.9 |
| ***Appearance cured film:*** | ***Turbid, bad wetting, craters*** | ***Turbid, bad wetting, craters*** | ***Good*** | ***Good*** |
| ***SIMS*** | ***No enrichment of nanoparticles at the surface*** | | | ***Enrichment of the particles* at *the surface*** |

## Claims

1. Coated particles comprising particles having a surface with hydroxy functional groups and a polysiloxane coating comprising a reaction product of polysiloxane disilanol according to formula I: 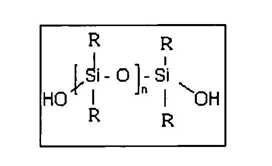 wherein n is 1 to 25, and wherein each R is a same or different hydrocarbon group, and a coating crosslinker which polysiloxane coating is at least partly grafted to the particle surface by reaction with the hydroxy functional groups on the particles.

2. Coated particles according to claim 1, wherein the coating crosslinker agent is an alkoxysilane having the structure [R'O]m -Si - [R"]4-m wherein m = 2, 3 or 4 and R' and R" are hydrocarbon groups.

3. The coated particles according to claims 1 to 4, wherein the alkoxy silane has an average number of alkoxy groups between 2.5 and 4.

4. The coated particles according to claims 1 to 3, wherein the molar ratio of the coating crosslinker relative to the polysiloxane disilanol is between 2 and 0.1, preferably between 1.5 and 0.8 and most preferably between 1.2 and 0.8.

5. The coated particles according to claim 1 to 4, wherein the particles have an average diameter between 1 and 400 nanometres.

6. The coated particles according to claim 1 to 5, wherein the solid weight fraction of particles in the coated particles is between 30 and 95 weight % (relative to the total weight of the coated particles).

7. The coated particles according to claims 1 to 6, wherein the particles have an average diameter between 4 and 50 nanometres and wherein the solid weight fraction of the particles in the coated particles is between 50 and 90 w%.

8. The coated particles according to claims 1 to 7, wherein the particles are chosen from the group of silica, alumina, titania and hybrids thereof, glass, mineral or synthetic clay, zeolite and organic particles having hydroxyl groups on the surface of the particle.

9. The coated particles according to claims 1 to 8, wherein the particles are silica particles wherein the polysiloxane disilanol is bonded to the silica particles over an [-Si-O-Si-] bond.

10. The coated particles according to claim 1 to 9, wherein the polysiloxane disilanol has an average number of siloxane groups n between 1 and 10, preferably between 2 and 5.

11. The coated particles according to claim 1 to 10, wherein the hydroxy functional groups on the particles surface are partly esterified with an alcohol.

12. The coated particles according to claims 1 to 11, wherein the hydrocarbon on the polysiloxane disilanol is an alkyl having 1 - 4 carbon atoms.

13. Coated particles according to the invention comprising nanosilica particleshaving a surface with hydroxy functional groups optionally partly esterified and a polysiloxane coating comprising a reaction product of polysiloxane disilanol according to formula I: 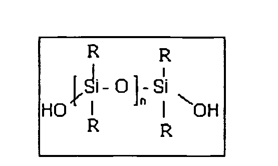 wherein n is 1 to 25, and wherein each R is a same or different hydrocarbon group having 1 - 4 carbon atoms, and as a coating crosslinker an alkoxysilane having the structure [R'O]ₘ―Si―[R"]₄₋ₘ wherein m = 3 or 4 and the average number of alkoxy groups m is between 2.5 and 4, and wherein R' and R" are hydrocarbon groups, which polysiloxane coating is at least partly grafted to the particle surface by reaction with the hydroxy functional groups on the particles, wherein the molar ratio of the coating crosslinker relative to the polysiloxane disilanol is between 2 and 0.1, wherein the particles have an average diameter between 4 and 50 nanometres and wherein the solid weight fraction of the particles in the coated particles is between 50 and 90 w% (relative to the total weight of the coated article) and wherein the hydrocarbon on the polysiloxane disilanol is an alkyl having 1 - 4 carbon atoms.

14. Method for the preparation of coated particles according to anyone of claims 1 to 13 wherein a polysiloxane coating is grafted onto the particles by reacting, at elevated temperature, organic modified particles in an aprotic organic colloidal dispersion with
a. a polysiloxane disilanol according to formula I: 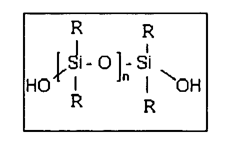 wherein n is 1 to 25, and wherein each R is a same or different hydrocarbon group and
b. an alkoxysilane having the structure [R'O]m―Si―[R"]4-m wherein m = 2, 3 or 4 and R' and R" are same or different hydrocarbon groups.

15. Method according to claim 14, wherein the organic modified particles in an aprotic organic colloidal dispersion are produced by:
a. Providing a particles dispersion in water (aquasol),
b. Converting the particles aquasol to an organosol by replacing the water by an organic solvent and reacting at elevated temperatures at least a part of the hydroxy functional groups on the surface of the particles with an organic group to make organic modified particles,
c. Providing to the organic modified particles an aprotic organic solvent to create an aprotic organic colloidal dispersion.

16. Method according to claim 15, wherein the organic modified particles in an aprotic organic colloidal dispersion are produced by at least partly esterifying the hydroxy functional groups on the surface of the particles with an alcohol and replacing the alcohol by an aprotic solvent.

17. The method according to claim 14 to 16, wherein the alkoxy silane has an average number of alkoxy groups between 2.5 and 4.

18. The method according to claim 14 to 16, wherein the molar ratio of the alkoxy silane relative to the polysiloxane disilanol is between 2 and 0.8.

19. Coated particles obtainable by the method of any one of claims 14 to 18.

20. The use of coated particles according to claims 1 to 13 in a polymer composition to improve the surface properties of the polymer composition.

21. Material composition comprising a polymer material and coated particles according to claims 1 to 13.

22. Coating composition comprising a polymer binder and coated particles according to anyone of claims 1 to 13.

23. Coating composition according to claim 22, comprising between 0.1 and 15 wt.% (relative to the total coating solids weight) of the coated particles according to claims 1 to 13.

24. Coating composition according to claim 23 which is a clear coating composition having essentially no pigments for making a clear top coating finish or refinish.
